# EUROPEAN PATENT SPECIFICATION

(11) **EP 2 494 167 B1**
(45) Date of publication and mention of the grant of the patent: **23.11.2016**
(21) Application number: 10757368.5
(22) Date of filing: 16.09.2010
(51) Int. Cl.: F02C 3/113, F02C 6/16, F02C 6/02, F04D 17/12, F04D 25/04, F02C 1/02

(54) **AIR COMPRESSION AND EXPANSION SYSTEM WITH SINGLE SHAFT COMPRESSOR AND TURBINE ARRANGEMENT**
LUFTKOMPRESSIONS- UND EXPANSIONSSYSTEM MIT EINWELLENKOMPRESSOR UND TURBINENANORDNUNG
SYSTÈME DE COMPRESSION ET DE DÉTENTE D'AIR AVEC AGENCEMENT DE COMPRESSEUR ET DE TURBINE À UN SEUL ARBRE

(30) Priority: 28.10.2009 US 607239
(43) Date of publication of application: 05.09.2012
(73) Proprietor: General Electric Company, Schenectady, NY 12345 (US)
(72) Inventor: FREUND, Sebastian, W., D-85748 Garching B. Muenchen (DE)
(74) Representative: Illingworth-Law, William Illingworth
(86) International application number: PCT/US2010/049073
(87) International publication number: WO 2011/056303

(56) References cited:
- WO-A1-2009/118298
- US-A- 4 347 706
- US-A- 4 630 436
- US-A- 4 872 307
- US-A- 4 916 893

## Description

### BACKGROUND OF THE INVENTION

Embodiments of the invention relate generally to air compression and expansion systems and, more particularly, to air compression and expansion systems having a combined motor-generator unit and a single drive shaft coupled to compressors and expanders.

WO 2009/118298 A1 discloses a helicopter turbine engine comprising a gas turbine generator and a free turbine. The gas generator has a rotary shaft 18 and the free turbine is mounted on a shaft 16.

Air compression and expansion systems are used in a multitude of industries for a variety of applications. For example, one such application is the use of air compression and expansion systems as the turbomachinery in generating and storing energy. Compressed air energy storage (CAES) systems typically include a compression train having a plurality of compressors that compress intake air and provide the compressed intake air to a cavern, underground storage, or other compressed air storage component. The compressed air is then later used to drive turbines to produce energy such as, for example, electrical energy. During operation of the compression stage of a CAES system, the compressed intake air is typically cooled. During operation of the expansion stage, air is discharged from underground storage through turbines and expands such that the air exits the turbines at ambient pressure.

Typically, compressors and turbines in CAES systems are each connected to a generator/motor device through respective clutches, permitting operation either solely of the compressors or solely of the turbines during appropriate selected time periods. During off-peak periods of electricity demand in the power grid (i.e., nights and weekends), the compressor train is driven through its clutch by the generator/motor. In this scheme, the generator/motor functions as a motor, drawing power from a power grid. The compressed air is then cooled and delivered to underground storage. During peak demand periods, with the turbine clutch engaged, air is withdrawn from storage and then heated and expanded through a turbine train to provide power by driving the generator/motor. In this scheme, the generator/motor functions as a generator, providing power to a power grid, for example.

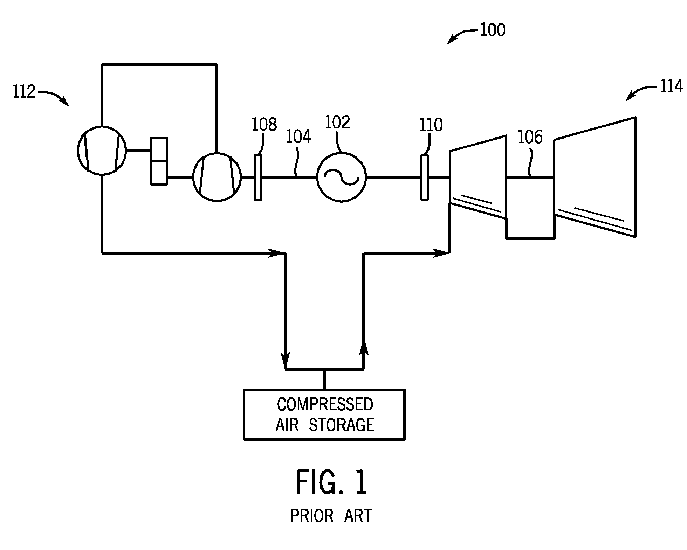

A typical arrangement of air compression and expansion system in a CAES system as known in the prior art is shown in FIG. 1. The air compression and expansion system 100 is configured to alternately operate in a compression mode and an expansion mode and includes a combined motor-generator unit 102, drive shafts 104, 106, clutches 108, 110, a compressor system 112, and a turbine system 114.

Motor-generator unit 102 is electrically connected to a baseload power supply via a power transmission line, and receives power therefrom during the compression mode of operation. During operation in the compression mode, motor-generator unit 102 generates rotational power that is transmitted to compressor system 112 by way of drive shaft 104. Clutch 108 is engaged to couple the compressor system 112 to the drive shaft 104 and motor-generator unit 102, thereby driving the compressor system 112 to compress air that is stored for subsequent power generation.

Upon switching of air compression and expansion system 100 to the expansion mode of operation, the supply of power to motor-generator unit 102 is terminated such that the transfer of rotational power to drive shaft 104 is terminated and compressor system 112 is no longer powered. Clutch 110 is then engaged to couple turbine system 114 to drive shaft 106 and motor-generator unit 102, allowing for power to be transferred from turbine system 114 to motor-generator unit 102. Upon delivery of the stored compressed air to turbine system 114, rotational power is provided from turbine system 114, which is transferred to motor-generator unit 102 by way of drive shaft 106.

While the inclusion of drive shafts 104, 106, clutches 108, 110, compressor system 112, and turbine system 114 in air compression and expansion system 100 functions to generate power, it is not without its drawbacks. For example, the arrangement of multiple drive shafts 104, 106 and clutches 108, 110 requires many components and much space. Furthermore, the arrangement of drive shafts 104, 106, clutches 108, 110, compressor system 112, and turbine system 114 in air compression and expansion system 100 does not allow for transfer of rotational power when transitioning from the compression mode to the expansion mode of operation. That is, a rotational power present in drive shaft 104 during the compression mode of operation cannot be transferred to drive shaft 106 for use during the expansion mode of operation. As such, a loss of power is realized that could otherwise be utilized were such rotational power to be transferred during transition from the compression mode to the expansion mode of operation.

Therefore, it would be desirable to design a system and method that overcomes the aforementioned drawbacks.

### BRIEF DESCRIPTION OF THE INVENTION

Embodiments of the invention provide a system and method for providing an air compression and expansion system having a combined motor-generator unit and a single drive shaft coupled to compressors and expanders.

In accordance with one aspect of the invention, there is provided an air compression and expansion system in accordance with claim 1 hereof.

In accordance with another aspect of the invention, there is provided a method for manufacturing a system for compressing and expanding gas during respective compression and expansion modes of operation in accordance with claim 10 hereof.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:
FIG. 1 is a block schematic diagram of an air compression and expansion system as known in the prior art.
FIG. 2 is a block schematic diagram of an air compression and expansion system according to an embodiment of the present invention.
FIG. 3 is a block schematic diagram of an air compression and expansion system according to another embodiment of the present invention.
FIG. 4 is a block schematic diagram of a compressed air energy storage (CAES) system incorporating the air compression and expansion system of FIG. 2 according to an embodiment of the present invention.

### DETAILED DESCRIPTION

According to embodiments of the invention, an air compression and expansion system is provided having a combined motor-generator unit and a single drive shaft coupled to compressors and expanders.

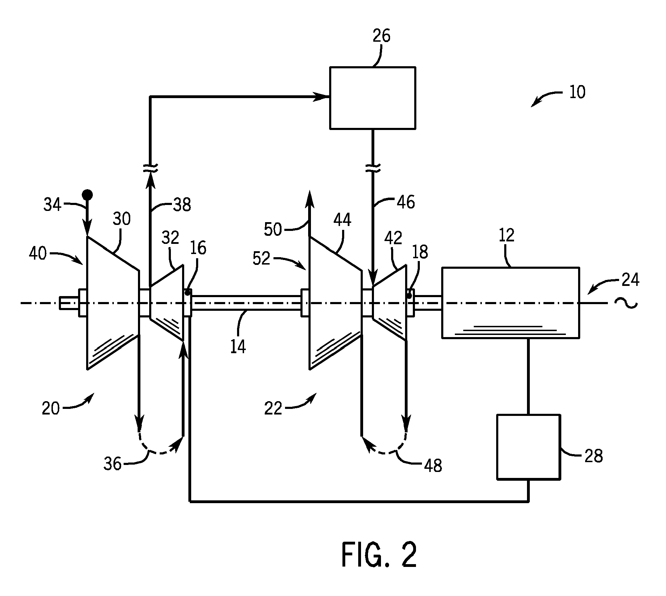

Referring to FIG. 2, an air compression and expansion system 10 is shown according to an embodiment of the invention. The air compression and expansion system 10 is configured to alternately operate in a compression mode and an expansion mode as determined by an operator. The air compression and expansion system 10 includes a combined motor-generator unit 12, a single drive shaft 14, compressor and turbine clutches 16, 18, a compressor system 20, and a turbine system 22. As shown in FIG. 2, compressor system 20 and turbine system 22 are each positioned coaxially about drive shaft 14 and on a same side of motor-generator unit 12, such that a single drive shaft 14 can be employed in air compression and expansion system 10. Similarly, each of compressor clutch 16 and turbine clutch 18 are positioned coaxially about drive shaft 14, with the compressor clutch 16 positioned between compressor system 20 and drive shaft 14 and turbine clutch 18 positioned between turbine system 22 and drive shaft 14. The coaxial clutches 16, 18 positioned on drive shaft 14 negate the need for compressor system 20 and turbine system to be mounted on separate shafts, but instead allows for the use of a single drive shaft 14 in air compression and expansion system 10.

During the compression mode of operation, motor-generator unit 12 is electrically connected to a baseload power source via a power transmission line 24 and receives power therefrom. The input of electrical power causes motor-generator unit 12 to operate in a motor mode, thereby generating a mechanical output of rotational power in response to the electrical power. The rotational power is transferred to drive shaft 14, thus causing the drive shaft to rotate. The compressor clutch 16 is engaged upon operation of air compression and expansion system 10 in the compression mode, thereby coupling compressor system 20 to the drive shaft 14 and motor-generator unit 12. Compressor system 20 is thus driven by the rotational power to compress air supplied thereto, with the compressed air being sent to a storage device 26, for example, for later use.

During operation of air compression and expansion system 10 in the compression mode, turbine clutch 18 is in a disengaged state such that turbine system 22 remains decoupled from drive shaft 14 and motor-generator unit 12. Turbine system 22 thus is not caused to rotate during the compression mode of operation, as it does not receive rotational power from drive shaft 14 and motor-generator unit 12.

When it is desired for air compression and expansion system 10 to operate in an expansion mode of operation, electrical power to motor-generator unit 12 is terminated, and air is retrieved from storage device 26 for expansion. In the expansion mode of operation, turbine clutch 18 is engaged such that turbine system 22 is engaged to the drive shaft 14 and motor-generator unit 12. Additionally, compressor clutch 16 is disengaged such that compressor system 20 is decoupled from the drive shaft 14 and motor-generator unit 12.

Upon switching to the expansion mode of operation, the previously compressed air is retrieved from storage device 26 and provided to turbine system 22, which causes the turbine system 22 to generate rotational power. As turbine system 22 is coupled to drive shaft 14, the drive shaft receives the rotational power and transfers this power to motor-generator unit 12. The motor-generator unit 12 operates in a generator mode during the expansion mode of operation, and thus generates electrical power in response to the received rotational power output from turbine system 22.

According to an exemplary embodiment of the invention, motor-generator unit 12 and drive shaft 14 are configured such that drive shaft 14 rotates in a constant uniform direction during each of the compression and expansion modes of operation. Accordingly, in an exemplary embodiment of the invention, compressor clutch 16 and turbine clutch 18 are configured as an actuatable clutch and a free-wheeling clutch (i.e., self-synchronizing clutch), respectively. Actuatable clutch 16 is configured to selectively couple and decouple compressor system 20 to drive shaft 14 as determined by an operator of air compression and expansion system 10. Free-wheel clutch 18 is configured to automatically couple and decouple turbine system 22 to drive shaft 14 based upon the mode of operation and a speed of drive shaft 14.

In operation of air compression and expansion system 10, an operator can supply an input to determine whether the system operates in a compression or expansion mode of operation. The operator may provide such input by way of a controller 28, for example, that is connected to motor-generator unit 12 and to actuatable clutch 16. Upon an input by controller 28 commanding system 10 to operate in the compression mode of operation, actuatable clutch 16 is commanded to engage, such that compressor system 20 is coupled to drive shaft 14. During the compression mode of operation, free-wheel clutch 18 is in a disengaged state such that turbine system 22 is decoupled from drive shaft 14.

Upon an input by controller 28 commanding system 10 to operate in the expansion mode of operation, actuatable clutch 16 is commanded to disengage, such that compressor system 20 is decoupled from drive shaft 14 and the compressor system ceases to receive rotational power from the drive shaft. During transition from the compression mode of operation to the expansion mode of operation, drive shaft 14 continues to rotate. Free-wheel clutch 18 is configured to automatically engage turbine system 22 with drive shaft 14 during the expansion stage upon a speed of the turbine system becoming synchronized with a speed of the drive shaft. That is, compressed air is provided to turbine system 22 upon switching to the expansion mode of operation, thereby causing turbine system 22 to start rotating. Upon a rotational speed of turbine system 22 becoming synchronized with a speed of drive shaft 14, free-wheel clutch 18 automatically engages the turbine system to the drive shaft. As such, the arrangement of actuatable clutch 16 and free-wheeling clutch 18 allows for the rotational power of drive shaft 14 that is generated during the compression mode of operation to be conserved and utilized by air compression and expansion system 10 upon transition to the expansion mode of operation.

Referring still to FIG. 2, a configuration and arrangement of compressor system 20 and turbine system 22 is shown according to an exemplary embodiment of the invention. Compressor system 20 includes a low pressure compressor 30 and a high pressure compressor 32, along with an input conduit 34 to introduce air into low pressure compressor 30, a connecting conduit 36 to transfer air from the low pressure compressor 30 to the high pressure compressor 32, and an output conduit 38 to expel air from the high pressure compressor 32. The input conduit 34 is positioned on an outer edge 40 of low pressure compressor 30 and the output conduit 38 is positioned in an area of the compressor system between the low pressure compressor 30 and the high pressure compressor 32. The low and high pressure compressors 30, 32 are positioned adjacent one another and are arranged on the drive shaft to have opposite flow directions. The arrangement of low and high pressure compressors 30, 32 to have opposite flow directions allows for compensation/dispersement of axial forces resulting from the compressor stages, reduces bearing loads, and allows for coupling multiple compressor stages with one clutch (i.e., compressor clutch 16).

Similar to compressor system 20, turbine system 22 includes a low pressure turbine 42 and a high pressure turbine 44, along with an input conduit 46 to introduce compressed air into the high pressure turbine 44, a connecting conduit 48 to transfer air from the high pressure turbine 44 to the low pressure turbine 42, and an output conduit 50 to expel air from the low pressure turbine 42. The input conduit 46 is positioned in an area of the turbine system between the low pressure turbine 42 and the high pressure turbine 44 and the output conduit 50 is positioned on an outer edge 52 of the turbine system 22. The low and high pressure turbines 42, 44 are positioned adjacent one another and are arranged on the drive shaft to have opposite flow directions. The arrangement of low and high pressure turbines 42, 44 to have opposite flow directions allows for compensation and/or dispersement of axial forces resulting from the expansion stages, reduces bearing loads, and allows for coupling multiple expansion stages with one clutch (i.e., turbine clutch 18).

While the compressor system 20 and turbine system 22 shown in FIG. 2 are formed of a low pressure compressor 30 and a high pressure compressor 32 and of a low pressure turbine 42 and a high pressure turbine 44, respectively, it is recognized that the compressor system 20 and turbine system 22 could include a greater or lesser number of compressors/turbines. As such, it is recognized that compressor system 20 could be formed of a single compressor unit or of three or more compressor units. Similarly, turbine system 22 could be formed of a single turbine unit or of three or more turbine units. Air compression and expansion system 10 is thus not limited to the specific embodiment of FIG. 2, and compressor system 20 and turbine system 22 could be modified according to embodiments of the invention.

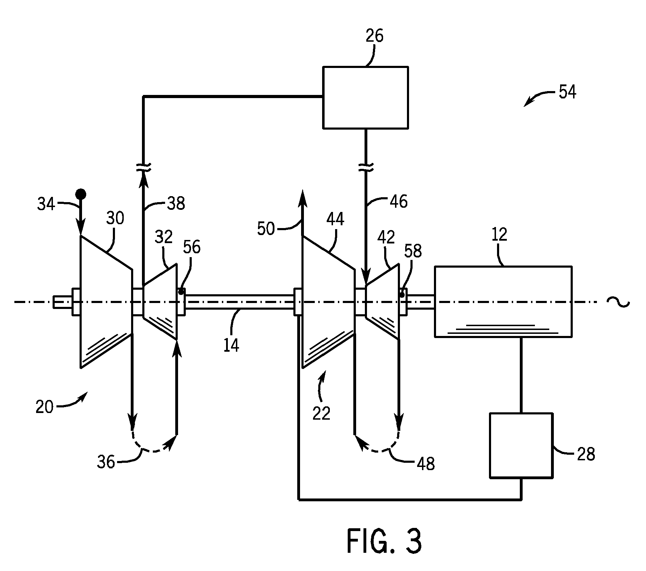

Referring now to FIG. 3, according to another embodiment of the invention, a compression and expansion system 54 includes a motor-generator unit 12 and drive shaft 14 configured such that drive shaft 14 rotates in a first direction during the compression mode of operation and in a second, opposite direction during the expansion mode of operation. Accordingly, a compressor clutch 56 attached to a compressor system 20 and a turbine clutch 58 attached to a turbine system 22 are configured as a free-wheeling clutch (i.e., self-synchronizing clutch) and an actuatable clutch, respectively. Free-wheel clutch 56 is configured to automatically couple and decouple compressor system 20 to drive shaft 14 based upon the mode of operation and a speed of drive shaft 14. Actuatable clutch 58 is configured to selectively couple and decouple turbine system 22 to drive shaft 14 as determined by input from an operator of air compression and expansion system 10.

In operation of air compression and expansion system 54, an operator supplies an input to determine whether the system operates in a compression or expansion mode of operation, such as by way of controller 28, for example, that is connected to motor-generator unit 12 and to actuatable clutch. Upon an input by controller 28 commanding system 54 to operate in the compression mode of operation, actuatable clutch 58 is commanded to disengage, such that turbine system 22 is decoupled from drive shaft 14. Drive shaft 14 is driven by motor-generator unit 12 in the compression stage and free-wheel clutch 56 acts to automatically engage compressor system 20 with drive shaft 14 during the compression stage upon drive shaft 14 reaching a desired speed. During transition from the compression mode of operation to the expansion mode of operation, free-wheel clutch 56 automatically disengages compression system 20 from drive shaft 14, such as when a speed of the drive shaft reaches a certain threshold rotational speed. Also during transition to the expansion mode of operation, rotation of drive shaft 14 is interrupted and controller 28 provides an input to actuatable clutch 58 to engage, thereby coupling turbine system 22 to drive shaft 14 to provide rotational power to the drive shaft and cause it to rotate in an opposite direction from that of the compression stage.

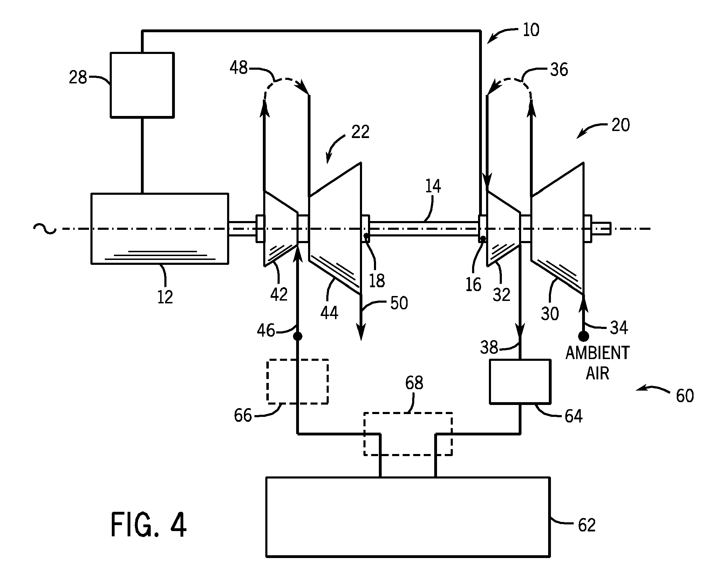

Referring to FIG. 4, a block diagram of an exemplary compressed air energy storage (CAES) system 60 is shown according to an embodiment of the invention. CAES system 60 includes an air compression and expansion system, such as air compression and expansion system 10 shown and described in FIG. 2, and also includes a compressed air storage volume 62.

According to an embodiment of the invention, motor-generator unit 12 drives drive shaft 14 during a compression mode of operation (i.e., compression stage). In turn, drive shaft 14 drives compression system 20, which includes a low pressure compressor 30 and a high pressure compressor 32, such that a quantity of ambient air enters ambient air intake 34 and is compressed by the compression system 20. Low pressure compressor 30 is coupled to high pressure compressor 32 via a compressor path 36. According to the present embodiment, low pressure compressor 30 compresses the ambient air. The compressed ambient air then passes along compressor path 36 to high pressure compressor 32, where the ambient air is further compressed before providing the compressed air along a compressed air path 38 to compressed air storage volume or cavern 62.

Though only two compressors 30, 32 are shown in the present embodiment, it is contemplated that compression system 20 could include more than two compressors. Similar to compressor path 36, embodiments having more than two compressors would include a compressor path through each compressor providing passage of air through the compression system.

According to the present embodiment, before the compressed air is stored in cavern 62, it is passed through a cooling unit 64 that removes heat from the compressed air prior to storage of the cavern. By removing heat from the compressed air prior to storage, the integrity of cavern 62 is protected. It is contemplated that other coolers such as an intercooler (not shown) could be utilized along compressor path 36 to cool air as it travels through compression system 20.

After compressed air is stored in compressed air storage volume 62, compressed air can be allowed to pass along exit path 46, where it is reheated via heating unit 66. After the compressed air is reheated, the compressed air proceeds down the exit path 46 to turbine system 22. Due to the configuration of turbine system 22, the compressed air is allowed to expand as it passes therethrough; thus, causing rotation of turbine system 22. It is contemplated that turbine system 22 includes one or more turbines to facilitate power generation, such as a low pressure turbine 42 and a high pressure turbine 44. The rotation of turbine system 22 causes a drive shaft 14 to rotate. In turn, drive shaft 14 drives motor-generator unit 12, causing the unit to function as a generator to produce electricity. It is further contemplated that additional heaters or combustors could be placed before, as well as in between, the stages of turbine system 22.

In an alternate embodiment, CAES system 60 is an adiabatic system that includes a thermal energy storage (TES) system TES system 68. In such an embodiment, compressed air passing along compressed air path 38 to cavern 62 passes through TES system 68, which removes heat from the compressed air. The heat is stored by TES system 68, and is later conveyed back to the compressed air as the compressed air passing along exit path 46 passes back through TES system 68. In such an embodiment, the need for heating unit 66 may be avoided.

While the compressor system 20 and turbine system 22 shown in FIG. 3 are formed of a low pressure compressor 30 and a high pressure compressor 32 and of a low pressure turbine 42 and a high pressure turbine 44, respectively, it is recognized that the compressor system 20 and turbine system 22 could include a greater or lesser number of compressors/turbines. Additionally, it is recognized that additional cooling units 64 and/or heating units 66 could be included in CAES system 60 between stages of compressor system 20 and turbine system 22, respectively. Alternatively, it is recognized that additional TES systems 68 could be included in CAES system 60 between stages of compressor system 20 and turbine system 22.

While air compression and expansion system 10 is discussed above as being implemented for use in a CAES system 60, it is recognized that embodiments of the invention may be implemented in any of a number of systems. Embodiments of the invention are thus recognized as capable of being implemented in other types of systems not specifically described or set forth above.

Therefore, according to one embodiment of the invention, an air compression and expansion system is provided that is operable in a compression mode and an expansion mode. The air compression and expansion system includes a motor-generator unit, a single drive shaft connected to the motor-generator unit and configured to transmit rotational power to and from the motor-generator unit, a compressor system selectively coupleable to the single drive shaft and positioned thereabout, and a turbine system selectively coupleable to the single drive shaft and positioned thereabout, the turbine system positioned with the compressor system on a common side of the motor-generator unit. The air compression and expansion system also includes a compressor clutch attached to the compressor system and arranged coaxially about the single drive shaft, the compressor clutch being configured to selectively couple and decouple the compressor system to the single drive shaft. The air compression and expansion system further includes a turbine clutch attached to the turbine system and arranged coaxially about the single drive shaft, the turbine clutch configured to selectively couple and decouple the turbine system to the single drive shaft.

According to another embodiment of the invention, a method for manufacturing a system for compressing and expanding gas during respective compression and expansion modes of operation is set forth. The method includes providing a combined motor-generator unit configured to generate both mechanical power and electrical power and coupling a single drive shaft to the motor-generator unit, with the single driveshaft coupled to receive a rotational power from the motor-generator unit and transmit a rotational power to the motor-generator unit. The method also includes arranging a compressor system and a turbine system about the single drive shaft and on a common side of the combined motor-generator unit to compress and expand gas during compression and expansion modes of operation, respectively. A first clutch mechanism is arranged coaxially about the drive shaft and is configured to selectively couple and decouple the compressor system to the single drive shaft during the compression and expansion modes of operation, and a second clutch mechanism is arranged coaxially about the drive shaft and is configured to selectively couple and decouple the turbine system to the single drive shaft during the compression and expansion modes of operation. The provided arrangement of the compressor and turbine systems and the first and second clutch mechanisms allows for constant rotation of the single drive shaft during a transition between the compression and expansion modes of operation.

According to yet another embodiment of the invention, a system for compressing and expanding gas a system for compressing and expanding gas and being operable in a compression mode and an expansion mode is provided. The system includes a combined motor-generator unit configured to both generate mechanical power and electrical power and a drive shaft connected to the motor-generator unit and configured to transmit rotational power to and from the motor-generator unit, with the drive shaft rotating in a uniform direction during each of the compression mode of operation and the expansion mode of operation. The system also includes a compressor system positioned on the drive shaft and configured to selectively compress gas when driven by rotational power from the drive shaft, a turbine system positioned on the drive shaft and configured to selectively expand gas to provide rotational power to the drive shaft, an actuatable clutch attached to the compressor system to selectively couple and decouple the compressor system to the drive shaft, and a free-wheel clutch attached to the turbine system to automatically couple and decouple the turbine system to the drive shaft. The drive shaft continues to rotate in the uniform direction during a transition from the compression mode of operation to the expansion mode of operation.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. An air compression and expansion system (10) operable in a compression mode and an expansion mode, the air compression and expansion system comprising:
a motor-generator unit (12);
a single drive shaft (14) connected to the motor-generator unit (12) and configured to transmit rotational power to and from the motor-generator unit;
a compressor system (20) selectively coupleable to the single drive shaft (14) and positioned thereabout;
a turbine system (22) selectively coupleable to the single drive shaft (14) and positioned thereabout, the turbine system (22) positioned with the compressor system (20) on a common side of the motor-generator unit (12);
a compressor clutch (16) arranged coaxially about the single drive shaft (14) and attached to the compressor system (20), the compressor clutch (16) configured to selectively couple and decouple the compressor system (20) to the single drive shaft (14); and
a turbine clutch (18) arranged coaxially about the single drive shaft (14) and attached to the turbine system (22), the turbine clutch (18) configured to selectively couple and decouple the turbine system (22) to the single drive shaft (14);
**characterised in that** the compression system (20) comprises:
a low pressure compressor (30); and
a high pressure compressor (32) positioned adjacent the low pressure compressor;
wherein the low pressure compressor (30) and the high pressure compressor (32) are arranged on the drive shaft (14) to have opposite flow directions; or in that the turbine system (22) comprises:
a low pressure turbine (42); and
a high pressure turbine (44) positioned adjacent the low pressure turbine;
wherein the low pressure turbine and the high pressure turbine are arranged on the drive shaft (14) to have opposite flow directions.

2. The air compression and expansion system of claim 1 wherein the compressor clutch (16) comprises an actuatable clutch configured to selectively couple and decouple the compressor system to the drive shaft; and
wherein the turbine clutch (18) comprises a free-wheel clutch configured to automatically couple and decouple the turbine system to the drive shaft.

3. The air compression and expansion system of claim 2 wherein the drive shaft (14) is arranged to rotate in a single direction during each of the compression and expansion stages.

4. The air compression and expansion system of claim 2 wherein the free-wheel clutch is configured to automatically couple the turbine system (22) with the drive shaft (14) during the expansion stage upon a rotational speed of the turbine system (22) becoming synchronized with a rotational speed of the drive shaft (14).

5. The air compression and expansion system of claim 1, wherein the compressor clutch (16) comprises a free-wheel clutch configured to automatically couple and decouple the compressor system (20) with the drive shaft (14); and
wherein the turbine clutch (18) comprises an actuatable clutch configured to selectively couple and decouple the turbine system (22) with the drive shaft (14).

6. The air compression and expansion system of claim 5 wherein the drive shaft (14) is arranged to rotate in a first direction during the compression stage and arranged to rotate in a second direction opposite from the first direction during the expansion stage.

7. The air compression and expansion system of claim 1 wherein the compression system further comprises:
an input conduit (34) to introduce air into the low pressure compressor (30), the input conduit being positioned on an outer edge of the compression system;
a connecting conduit (36) to transfer air from the low pressure compressor to the high pressure compressor; and
an output conduit (38) to expel air from the high pressure compressor (32), the output conduit being positioned in an area of the compression system between the low pressure compressor and the high pressure compressor.

8. The air compression and expansion system of claim 1 wherein the turbine system further comprises:
an input conduit (46) to introduce compressed air into the high pressure turbine (44), the input conduit being positioned in an area of the turbine system between the low pressure turbine and the high pressure turbine;
a connecting conduit (48) to transfer air from the high pressure turbine to the low pressure turbine; and
an output conduit (50) to expel air from the low pressure turbine (42), the output conduit being positioned on an outer edge of the turbine system.

9. The air compression and expansion system of claim further 1 comprising a controller (28) configured to selectively actuate one of the compressor clutch (16) and the turbine clutch (18) to selectively couple and decouple one of the compressor system (20) and the turbine system (22) to the drive shaft (14).

10. A method for manufacturing a system for compressing and expanding gas during respective compression and expansion modes of operation, the method comprising:
providing a combined motor-generator unit (12) configured to generate both mechanical power and electrical power;
coupling a single drive shaft (14) to the motor-generator unit (12), the single driveshaft coupled to receive a rotational power from the motor-generator unit and transmit a rotational power to the motor-generator unit;
arranging a compressor system (20) and a turbine system (22) about the single drive shaft and on a common side of the combined motor-generator unit to compress and expand gas during compression and expansion modes of operation, respectively;
arranging a first clutch mechanism (16) coaxially about the drive shaft, the first clutch mechanism configured to selectively couple and decouple the compressor system to the single drive shaft during the compression and expansion modes of operation; and
arranging a second clutch mechanism (18) coaxially about the drive shaft, the second clutch mechanism configured to selectively couple and decouple the turbine system to the single drive shaft during the compression and expansion modes of operation;
wherein the arrangement of the compressor and turbine systems and the first and second clutch mechanisms allow for constant rotation of the single drive shaft (14) during a transition between the compression and expansion modes of operation; and wherein
providing the compression system comprises providing a low pressure compressor (30) and a high pressure compressor (32), the low pressure compressor and the high pressure compressor being arranged on the single drive shaft to have opposite flow directions; and wherein
providing the turbine system comprises providing a low pressure turbine (42) and a high pressure turbine (44), the low pressure turbine and the high pressure turbine being arranged on the single drive shaft to have opposite flow directions.

11. The method of claim 10 wherein providing the first clutch mechanism (16) comprises providing an actuatable clutch coupled to the compressor system to selectively couple and decouple the compressor system with the single drive shaft.

12. The method of claim 10 wherein providing the second clutch mechanism (18) comprises providing a self-synchronizing clutch coupled to the turbine system to automatically couple and decouple the turbine system with the drive shaft, the self-synchronizing clutch configured to automatically engage the turbine system with the drive shaft upon a rotational speed of the turbine system becoming synchronized with a rotational speed of the drive shaft.

## Patentansprüche

1. Luftverdichtungs- und -ausdehnungssystem (10), das in einem Verdichtungsmodus und einem Ausdehnungsmodus betriebsfähig ist, das Luftverdichtungs- und -ausdehnungssystem umfassend:
eine Motor-Generator-Einheit (12);
eine einzelne Antriebswelle (14), die mit der Motor-Generator-Einheit (12) verbunden ist und zum Übertragen von Drehleistung zur und von der Motor-Generator-Einheit konfiguriert ist;
ein Verdichtersystem (20), das selektiv an die einzelne Antriebswelle (14) kuppelbar und darum herum angeordnet ist;
ein Turbinensystem (22), das selektiv an die einzelne Antriebswelle (14) kuppelbar und darum herum angeordnet ist, wobei das Turbinensystem (22) mit dem Verdichtersystem (20) auf einer gemeinsamen Seite der Motor-Generator-Einheit (12) angeordnet ist;
eine Verdichterkupplung (16), die koaxial um die Antriebswelle (14) angeordnet und am Verdichtersystem (20) angebracht ist, wobei die Verdichterkupplung (16) zum selektiven Einkuppeln und Auskuppeln des Verdichtersystems (20) an der einzelnen Antriebswelle (14) konfiguriert ist; und
eine Turbinenkupplung (18), die koaxial um die Antriebswelle (14) angeordnet und am Turbinensystem (22) angebracht ist, wobei die Turbinenkupplung (18) zum selektiven Einkuppeln und Auskuppeln des Turbinensystems (22) an der einzelnen Antriebswelle (14) konfiguriert ist; **dadurch gekennzeichnet, dass** das Verdichtersystem (20) folgendes umfasst:
einen Niederdruckverdichter (30); und
einen Hochdruckverdichter (32), der dem Niederdruckverdichter benachbart angeordnet ist;
wobei der Niederdruckverdichter (30) und der Hochdruckverdichter (32) derart an der Antriebswelle (14) angeordnet sind, das sie entgegengesetzte Stromrichtungen aufweisen; oder dadurch, dass
das Turbinensystem (22) folgendes umfasst:
eine Niederdruckturbine (42); und
eine Hochdruckturbine (44), die der Niederdruckturbine benachbart angeordnet ist;
wobei die Niederdruckturbine und die Hochdruckturbine derart an der Antriebswelle (14) angeordnet sind, das sie entgegengesetzte Stromrichtungen aufweisen.

2. Luftverdichtungs- und -ausdehnungssystem nach Anspruch 1, wobei die Verdichterkupplung (16) eine betätigungsfähige Kupplung umfasst, die zum selektiven Einkuppeln und Auskuppeln des Verdichtersystems an der Antriebswelle konfiguriert ist; und
wobei die Turbinenkupplung (18) eine Freilaufkupplung umfasst, die zum automatischen Einkuppeln und Auskuppeln des Turbinensystems an der Antriebswelle konfiguriert ist.

3. Luftverdichtungs- und -ausdehnungssystem nach Anspruch 2, wobei die Antriebswelle (14) zum Drehen in einer einzigen Richtung während jeder der Verdichtungs- und Ausdehnungsstufen angeordnet ist.

4. Luftverdichtungs- und -ausdehnungssystem nach Anspruch 2, wobei die Freilaufkupplung daraufhin zum automatischen Einkuppeln des Turbinensystems (22) in die Antriebswelle (14) während der Ausdehnungsstufe konfiguriert ist, dass eine Drehzahl des Turbinensystems (22) mit einer Drehzahl der Antriebswelle (14) synchronisiert wird.

5. Luftverdichtungs- und -ausdehnungssystem nach Anspruch 1, wobei die Verdichterkupplung (16) eine Freilaufkupplung umfasst, die zum automatischen Einkuppeln und Auskuppeln des Verdichtersystems (20) an der Antriebswelle (14) konfiguriert ist; und
wobei die Turbinenkupplung (18) eine betätigungsfähige Kupplung umfasst, die zum selektiven Einkuppeln und Auskuppeln des Turbinensystems (22) an der Antriebswelle (14) konfiguriert ist.

6. Luftverdichtungs- und -ausdehnungssystem nach Anspruch 5, wobei die Antriebswelle (14) zum Drehen in einer ersten Richtung während der Verdichtungsstufe angeordnet ist und zum Drehen in einer zweiten Richtung, die der ersten Richtung entgegengesetzt ist, während der Ausdehnungsstufe angeordnet ist.

7. Luftverdichtungs- und -ausdehnungssystem nach Anspruch 1, wobei das Verdichtersystem ferner folgendes umfasst:
eine Einlassleitung (34) zum Einleiten von Luft in den Niederdruckverdichter (30), wobei die Einlassleitung an einer Außenkante des Verdichtersystems angeordnet ist;
eine Verbindungsleitung (36) zum Überführen von Luft vom Niederdruckverdichter zum Hochdruckverdichter; und
eine Auslassleitung (38) zum Ausstoßen von Luft aus dem Hochdruckverdichter (32), wobei die Auslassleitung in einem Bereich des Verdichtersystems zwischen dem Niederdruckverdichter und dem Hochdruckverdichter angeordnet ist.

8. Luftverdichtungs- und -ausdehnungssystem nach Anspruch 1, wobei das Turbinensystem ferner folgendes umfasst:
eine Einlassleitung (46) zum Einleiten von verdichteter Luft in die Hochdruckturbine (44), wobei die Einlassleitung in einem Bereich des Turbinensystems zwischen der Niederdruckturbine und der Hochdruckturbine angeordnet ist;
eine Verbindungsleitung (48) zum Überführen von Luft von der Hochdruckturbine zur Niederdruckturbine; und
eine Auslassleitung (50) zum Ausstoßen von Luft aus der Niederdruckturbine (42), wobei die Auslassleitung an einer Außenkante des Turbinensystems angeordnet ist.

9. Luftverdichtungs- und -ausdehnungssystem nach Anspruch 1, ferner umfassend eine Steuerung (28), die zum selektiven Betätigen von einer der Verdichterkupplung (16) und der Turbinenkupplung (18) zum selektiven Einkuppeln und Auskuppeln von einem des Verdichtersystems (20) und des Turbinensystems (22) an der Antriebswelle (14) konfiguriert ist.

10. Verfahren zum Herstellen eines Systems zum Verdichten und Ausdehnen von Gas während jeweiliger Verdichtungs- und Ausdehnungsbetriebsmodi, das Verfahren umfassend:
Vorsehen einer kombinierten Motor-Generator-Einheit (12), die zum Erzeugen von mechanischer Leistung wie auch elektrischer Leistung konfiguriert ist;
Kuppeln einer einzelnen Antriebswelle (14) an die Motor-Generator-Einheit (12), wobei die einzelne Antriebswelle zum Aufnehmen einer Drehleistung von der Motor-Generator-Einheit und Übertragen der Drehleistung auf die Motor-Generator-Einheit angekuppelt ist;
Anordnen eines Verdichtersystems (20) und eines Turbinensystems (22) um die Antriebswelle und auf einer gemeinsamen Seite der kombinierten Motor-Generator-Einheit zum Verdichten und Ausdehnen von Gas während Verdichtungs- bzw. Ausdehnungsbetriebsmodi;
Anordnen eines ersten Kupplungsmechanismus (16) koaxial um die Antriebswelle, wobei der erste Kupplungsmechanismus zum selektiven Einkuppeln und Auskuppeln des Verdichtersystems an der einzelnen Antriebswelle während der Verdichtungs- und Ausdehnungsbetriebsmodi konfiguriert ist; und
Anordnen eines zweiten Kupplungsmechanismus (18) koaxial um die Antriebswelle, wobei der zweite Kupplungsmechanismus zum selektiven Einkuppeln und Auskuppeln des Turbinensystems an der einzelnen Antriebswelle während der Verdichtungs- und Ausdehnungsbetriebsmodi konfiguriert ist;
wobei die Anordnung des Verdichter- und Turbinensystems und des ersten und zweiten Kupplungsmechanismus konstante Drehung der einzelnen Antriebswelle (14) während eines Übergangs zwischen den Verdichtungs- und Ausdehnungsbetriebsmodi ermöglicht; und wobei
das Vorsehen des Verdichtersystems das Vorsehen eines Niederdruckverdichters (30) und eines Hochdruckverdichters (32) umfasst, wobei der Niederdruckverdichter und der Hochdruckverdichter derart an der einzelnen Antriebswelle angeordnet sind, dass sie entgegengesetzte Stromrichtungen aufweisen; und wobei
das Vorsehen des Turbinensystems das Vorsehen einer Niederdruckturbine (42) und einer Hochdruckturbine (44) umfasst, wobei die Niederdruckturbine und die Hochdruckturbine derart an der einzelnen Antriebswelle angeordnet sind, dass sie entgegengesetzte Stromrichtungen aufweisen.

11. Verfahren nach Anspruch 10, wobei das Vorsehen des ersten Kupplungsmechanismus (16) das Vorsehen einer betätigungsfähigen Kupplung umfasst, die an das Verdichtersystem gekuppelt ist, um das Verdichtersystem selektiv an der Antriebswelle einzukuppeln und auszukuppeln.

12. Verfahren nach Anspruch 10, wobei das Vorsehen des zweiten Kupplungsmechanismus (18) das Vorsehen einer selbstsynchronisierenden Kupplung umfasst, die an das Turbinensystem gekuppelt ist, um das Turbinensystem automatisch an der Antriebswelle einzukuppeln und auszukuppeln, wobei die selbstsynchronisierende Kupplung daraufhin zum automatischen Einrücken des Turbinensystems in die Antriebswelle konfiguriert ist, dass eine Drehzahl des Turbinensystems mit einer Drehzahl der Antriebswelle synchronisiert wird.

## Revendications

1. Système de compression et de détente d'air (10) capable de fonctionner en mode de compression et en mode de détente, le système de compression et de détente d'air comprenant :
une unité de moteur-générateur (12) ;
un arbre d'entraînement unique (14) raccordé à l'unité de moteur-générateur (12) et configuré pour transmettre de l'énergie rotative à l'unité de moteur-générateur et en sens inverse ;
un système de compresseur (20) qui peut être couplé sélectivement à l'arbre d'entraînement unique (14) et positionné autour de celui-ci ;
un système de turbine (22) qui peut être couplé sélectivement à l'arbre d'entraînement unique (14) et positionné autour de celui-ci, le système de turbine (22) étant positionné avec le système de compresseur (20) sur un côté commun de l'unité de moteur-générateur (12) ;
un embrayage de compresseur (16) aménagé coaxialement autour de l'arbre d'entraînement unique (14) et fixé au système de compresseur (20), l'embrayage de compresseur (16) étant configuré pour coupler et désaccoupler sélectivement le système de compresseur (20) avec l'arbre d'entraînement unique (14) ; et
un embrayage de turbine aménagé coaxialement autour de l'arbre d'entraînement unique (14) et fixé au système de turbine (22), l'embrayage de turbine (18) étant configuré pour coupler et désaccoupler sélectivement le système de turbine (22) avec l'arbre d'entraînement unique (14) ; **caractérisé en ce que** :
le système de compression (20) comprend :
un compresseur basse pression (30) ; et
un compresseur haute pression (32) positionné adjacent au compresseur basse pression ;
dans lequel le compresseur basse pression (30) et le compresseur haute pression (32) sont agencés sur l'arbre d'entraînement (14) pour avoir des sens d'écoulement opposés ; ou **en ce que**
le système de turbine (22) comprend :
une turbine basse pression (42) ; et
une turbine haute pression (44) positionnée adjacente à la turbine basse pression ;
dans lequel la turbine basse pression et la turbine haute pression sont agencées sur l'arbre d'entraînement (14) de manière à avoir des sens d'écoulement opposés.

2. Système de compression et de détente d'air selon la revendication 1, dans lequel l'embrayage de compresseur (16) comprend un embrayage actionnable configuré pour coupler et désaccoupler sélectivement le système de compresseur avec l'arbre d'entraînement ; et
dans lequel l'embrayage de turbine (18) comprend un embrayage en roue libre configuré pour coupler et désaccoupler automatiquement le système de turbine avec l'arbre d'entraînement.

3. Système de compression et de détente d'air selon la revendication 2, dans lequel l'arbre d'entraînement (14) est aménagé pour tourner dans un seul sens au cours de chacun des stades de compression et de détente.

4. Système de compression et de détente d'air selon la revendication 2, dans lequel l'embrayage à roue libre est configuré pour coupler automatiquement le système de turbine (22) à l'arbre d'entraînement (14) au cours du stade de détente lorsque la vitesse de rotation du système de turbine (22) devient synchronisée avec la vitesse de rotation de l'arbre d'entraînement (14).

5. Système de compression et de détente d'air selon la revendication 1, dans lequel l'embrayage de compresseur (16) comprend un embrayage à roue libre configuré pour coupler et désaccoupler automatiquement le système de compresseur (20) avec l'arbre d'entraînement (14) ; et
dans lequel l'embrayage de turbine (18) comprend un embrayage actionnable configuré pour coupler et désaccoupler sélectivement le système de turbine (22) avec l'arbre d'entraînement (14).

6. Système de compression et de détente d'air selon la revendication 5, dans lequel l'arbre d'entraînement (14) est agencé pour tourner dans un premier sens au cours du stade de compression et agencé pour tourner dans un second sens opposé au premier sens au cours du stade de détente.

7. Système de compression et de détente d'air selon la revendication 1, dans lequel le système de compression comprend en outre :
un conduit d'entrée (34) pour introduire de l'air dans le compresseur basse pression (30), le conduit d'entrée étant positionné sur un bord externe du système de compression ;
un conduit de raccordement (36) pour transférer de l'air du compresseur basse pression au compresseur haute pression ; et
un conduit de sortie (38) pour expulser l'air du compresseur haute pression (32), le conduit de sortie étant positionné dans une zone du système de compression entre le compresseur basse pression et le compresseur haute pression.

8. Système de compression et de détente d'air selon la revendication 1, dans lequel le système de turbine comprend en outre :
un conduit d'entrée (46) pour introduire de l'air comprimé dans la turbine haute pression (44), le conduit d'entrée étant positionné dans une zone du système de turbine entre la turbine basse pression et la turbine haute pression ;
un conduit de raccordement (48) pour transférer de l'air de la turbine haute pression à la turbine basse pression ; et
un conduit de sortie (50) pour expulser l'air de la turbine basse pression (42), le conduit de sortie étant positionné sur un bord externe du système de turbine.

9. Système de compression et de détente d'air selon la revendication 1, comprenant en outre un dispositif de commande (28) configuré pour actionner sélectivement l'un parmi l'embrayage de compresseur (16) et l'embrayage de turbine (18) pour coupler et désaccoupler sélectivement l'un parmi le système de compresseur (20) et le système de turbine (22) avec l'arbre d'entraînement (14).

10. Procédé de fabrication d'un système de compression et de détente de gaz au cours de modes respectifs de fonctionnement en compression et en détente, le procédé comprenant :
la fourniture d'une unité de moteur-générateur combinée (12) configurée pour générer à la fois de l'énergie mécanique et de l'énergie électrique ;
le couplage d'un arbre d'entraînement unique (14) avec l'unité de moteur générateur (12), l'arbre d'entraînement unique étant couplé pour recevoir un pouvoir de rotation de l'unité de moteur-générateur et transmettre un pouvoir de rotation à l'unité de moteur-générateur ;
aménager un système de compresseur (20) et un système de turbine (22) autour de l'arbre d'entraînement unique et sur un côté commun de l'unité de moteur-générateur combinée pour comprimer et détendre le gaz au cours de modes de fonctionnement en compression et en détente, respectivement ;
l'aménagement d'un premier mécanisme d'embrayage (16) coaxialement autour de l'arbre d'entraînement, le premier mécanisme d'embrayage étant configuré pour coupler et désaccoupler sélectivement le système de compresseur avec l'arbre d'entraînement unique au cours des modes de fonctionnement en compression et en détente ; et
l'aménagement d'un second mécanisme d'embrayage (18) coaxialement autour de l'arbre d'entraînement, le second mécanisme d'embrayage étant configuré pour coupler et désaccoupler sélectivement le système de turbine avec l'arbre d'entraînement unique au cours des modes de fonctionnement en compression et en détente ;
dans lequel l'aménagement des systèmes de compresseur et de turbine et des premier et second mécanismes d'embrayage permet la rotation constante de l'arbre d'entraînement unique (14) au cours d'une transition entre les modes de fonctionnement en compression et en détente ; et dans lequel :
la fourniture du système de compression comprend la fourniture d'un compresseur basse pression (30) et d'un compresseur haute pression (32), le compresseur basse pression et le compresseur haute pression étant aménagés sur l'arbre d'entraînement unique pour avoir des sens d'écoulement opposés ; et dans lequel
la fourniture du système de turbine comprend la fourniture d'une turbine basse pression (42) et d'une turbine haute pression (44), la turbine basse pression et la turbine haute pression étant aménagées sur l'arbre d'entraînement unique pour avoir des sens d'écoulement opposés.

11. Procédé selon la revendication 10, dans lequel la fourniture du premier mécanisme d'embrayage (16) comprend la fourniture d'un embrayage actionnable couplé au système de compresseur pour coupler et désaccoupler sélectivement le système de compresseur avec l'arbre d'entraînement unique.

12. Procédé selon la revendication 10, dans lequel la fourniture du second mécanisme d'embrayage (18) comprend la fourniture d'un embrayage à auto-synchronisation couplé au système de turbine pour coupler et désaccoupler automatiquement le système de turbine avec l'arbre d'entraînement, l'embrayage à auto-synchronisation étant configuré pour engager automatiquement le système de turbine sur l'arbre d'entraînement lorsque la vitesse de rotation du système de turbine devient synchronisée avec la vitesse de rotation de l'arbre d'entraînement.
